**Europäisches Patentamt**

**European Patent Office**

**Office européen des brevets**

(19)

(11) Veröffentlichungsnummer: **0 193 634**
A1

# (12) EUROPÄISCHE PATENTANMELDUNG

(21) Anmeldenummer: **85102591.6**

(22) Anmeldetag: **07.03.85**

(51) Int. Cl.⁴: **H 04 N 9/68**

(43) Veröffentlichungstag der Anmeldung: **10.09.86**
**Patentblatt 86/37**

(84) Benannte Vertragsstaaten: **DE FR GB IT NL**

(71) Anmelder: **Deutsche ITT Industries GmbH,**
**Hans-Bunte-Strasse 19 Postfach 840, D-7800 Freiburg**
**(DE)**

(72) Erfinder: **Freyberger, Laurin Clemens, Dipl,-Ing.,**
**Schönenbergstrasse 1, D-7833 Endingen a.K. (DE)**
Erfinder: **Schmidtpott, Friedrich, Dipl,-Ing., Am Büfing 6,**
**D-7803 Gundelfingen (DE)**

(74) Vertreter: **Morstadt, Volker, Dipl.-Ing., c/o Deutsche ITT**
**Industries GmbH Patent/Lizenzabteilung**
**Postfach 840 Hans-Bunte-Strasse 19,**
**D-7800 Freiburg/Brsg. (DE)**

(54) **Integrierte digitale Verstärkungsregelungs-Schaltung für das digitale Chrominanzsignal von digitalen Farbfernsehempfängern.**

(57) Das auf der hinteren Schwarzschulter des FBAS-Signals vorhandene Burst-Signal wird mittels einer Amplituden-Regelschleife auf einen vorgegebenen Normierungswert gebracht. Um die Verstärkung eines in der Regelschleife vorhandenen Multiplizierers (m) mit einfachen Mitteln weiter zu erhöhen, damit der Regelbereich auch auf sehr kleine, aber immer noch empfangswürdige FBAS-Signale ausgedehnt werden kann, wird dem Multiplizierer (m) ein einfach aufgebauter Vormultiplizierer (vm) vorgeschaltet, dessen Multiplikationsfaktor in Zweierpotenzen umschaltbar ist. Die Einstellung des Multiplikationsfaktors erfolgt dadurch, daß das bisherige Stellsignal (st) über einen Codewandler (cw) in zwei Steuersignale (st1, st2) umgewandelt wird, wobei das erste Steuersignal (st1) den Multiplikationsfaktor des Vormultiplizierers (vm) und das zweite Stellsignal (st2) den Multiplikationsfaktor des Multiplizierers (m) einstellt.

L.C. Freyberger et al 16 - 11

Fl 1238 EP
Sa/Be
5. März 1985

## Integrierte digitale Verstärkungsregelungs-Schaltung für das digitale Chrominanzsignal von digitalen Farbfernsehempfängern

Die Erfindung betrifft eine integrierte digitale Verstärkungsregelungs-Schaltung für das digitale Chrominanzsignal von digitalen Farbfernsehempfängern, die ein Chrominanzfilter und einen Multiplizierer sowie folgende an dessen Ausgang signalflußmäßig in dieser Reihenfolge angeschlossene Stufen enthält: eine Burstamplituden- Meßstufe, einen Subtrahierer, dessen Minuend-Eingang ein Referenzsignal zugeführt ist, und einen Akkumulator, dessen Ausgangssignal als Stellsignal der Verstärkungsregelung dient, vgl. den Oberbegriff des Anspruchs 1.

Eine derartige integrierte digitale Verstärkungsregelungs-Schaltung ist in der EP-OS 00 95 543 beschrieben. Mit ihr wird die Burstamplitude auf der hinteren Schwarzschulter des Farb-Bild-Austast-Synchronsignal-Gemischs (FBAS-Signal) mit einem intern abgespeicherten Referenzwert verglichen und mittels eines Multiplizierers mit einstellbarem Multiplikationsfaktor auf den gewünschten Amplitudenwert gebracht. Damit wird die Farbsättigung bei der Bildwiedergabe empfängerseitig normiert, so daß Amplituden-Störungen des Übertragungsweges, wie sie sich durch Reflektionen, durch schwach einfallende Empfangssignale oder durch einen ungenau auf die Empfangsfrequenz eingestellten Fernsehempfänger ergeben können, sich innerhalb gewisser Grenzen nur wenig auswirken. Beim Betrieb dieser Verstärkungsregelungs-Schaltung zeigt sich jedoch, daß der ursprünglich vorgesehene Regelbereich zu klein ist und es wünschenswert wäre, den Verstärkungsbereich zu vergrößern, weil dann auch noch sehr kleine, aber empfangswürdige Farbsignale zur Verarbeitung in den Farbteil gelangen und eine befriedigende Farbwiedergabe ergeben.

Die in den Ansprüchen gekennzeichnete Erfindung beseitigt diesen Nachteil, und es liegt ihr somit die Aufgabe zugrunde, die bekannte integrierte digitale Verstärkungsregelungs-Schaltung für das digitale Chrominanzsignal unter Berücksichtigung der bereits vorhandenen Schaltungsanordnung so zu erweitern, daß mit einfachen Mitteln der Bereich der Verstärkungsregelung im Sinne einer größeren Verstärkung erweitert werden kann und daß sich die Schaltung mit möglichst wenigen Eingriffen in das bisherige Schaltungskonzept einfügen läßt.

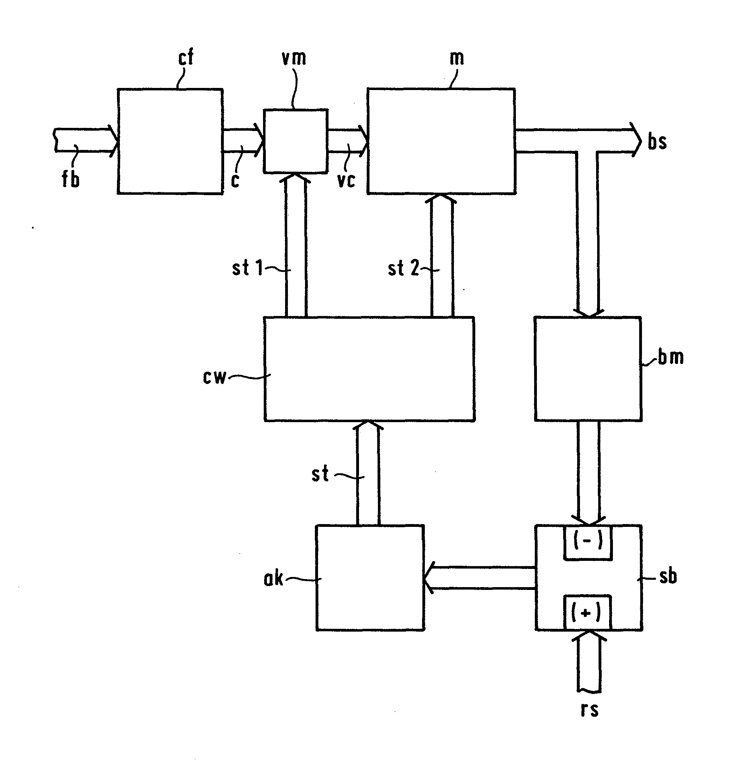

Die Erfindung wird nun anhand der Figur der Zeichnung näher erläutert. Sie zeigt in Form eines Blockschaltbildes den prinzipiellen Aufbau der erfindungsgemäßen integrierten digitalen Verstärkungsregelungs-Schaltung.

Im Blockschaltbild ist das digitale Chrominanzfilter cf vorgesehen, das aus dem digitalisierten FBAS-Signal fb das digitale Chrominanzsignal c herausfiltert. Dieses ist dem ersten Eingang des Vormultiplizierers vm zugeführt, dessen Ausgangssignal, das vorverstärkte Chrominanzsignal vc, den ersten Eingang des Multiplizierers m speist. Das Ausgangssignal des Multiplizierers m ist das verstärkte Chrominanzsignal bs, das zum einen weiteren, hier nicht erwähnten Schaltungsteilen zugeleitet ist und zum anderen den Eingang der Burstamplituden-Meßstufe bm speist. Deren Ausgang liegt am Subtrahend-Eingang des Subtrahierers sb, dessen Minuend-Eingang das Referenzsignal rs zugeführt ist. Das Ausgangssignal des Subtrahierers sb ist dem Akkumulator ak zugeführt, dessen Ausgangssignal als Stellsignal st dem Eingang des Codewandlers cw zugeführt ist. Dieser wandelt das Stellsignal st in das erste Steuersignal st1, das dem zweiten Ein-gang des Vormultiplizierers vm zugeführt ist, und in das zweite Steuersignal st2 um, das dem zweiten Eingang des Multiplizierers m zugeführt ist.

L.C. Freyberger et al 16 - 11 Fl 1238 EP

Der Multiplizierer m ist vorzugsweise nach dem Pipeline-Prinzip aufgebaut, bei dem von der geringstwertigen Stelle ausgehend jede jeweils nächsthöherwertige Stelle beim Zweiphasentaktbetrieb um die halbe Periodendauer eines Taktsignals verzögert verarbeitet wird. Diese Verarbeitungsweise hat den Vorteil, daß der Übertrag aus der nächstniederwertigen Stelle und die Summenbildung der beiden miteinander zu verknüpfenden Stellen der beiden Multiplikanden gleichzeitig das endgültige Summensignal dieser Stelle und das Übertragsignal für die nächsthöhere Stelle erzeugen. Durch diese Technik der zeitlich versetzten Verarbeitung jeder Stelle kann bei Datenstömen mit großer Stellenzahl die Taktfrequenz hoch und damit auch die Verarbeitungsgeschwindigkeit hoch bleiben. Der zeitlich versetzte Durchlauf der Stellen, der durch schrittweise Verzögerung der einzelnen Stellen zu Beginn der Verarbeitung erfolgt, was auch als Verkeilung des Datenwortes bezeichnet wird, stellt zwar eine Laufzeitverzögerung dar, denn am Ende muß eine entsprechende Entkeilung die Daten auch wieder zeitlich parallel verfügbar machen, aber nach jedem Takt ist jede Verarbeitungsstelle wieder frei für die Verarbeitung der entsprechenden Stelle des nächsten verkeilten Datenwortes. Somit erfolgt pro Takt tatsächlich die volle Verarbeitung in der gesamten Stellenanzahl.

Ein derart aufgebauter Multiplizierer hat eine räumlich und zeitlich vernetzte Struktur, tie nicht ohne größere Eingriffe erweitert werden kann. Der Multiplikationsfaktor des vorhandenen Multiplizierers m kann z.B. in Schritten von $2^{-7}$ zwischen $2^{-1}$ und $2^{5}$ umgeschaltet werden.

Die Erweiterung des Multiplikationsfaktors erfolgt nun dadurch, daß zwischen das Chrominanzfilter cf und den Multiplizierer m der Vormultiplizierer vm eingefügt ist. Dieser ist bevorzugt ein elektronischer Vielfachumschalter in den parallelen Datenleitungen des Chrominanzfilters cf. Der feste Anschlußpunkt der einzelnen Umschalter ist dabei mit jeweils einem Stelleneingang des Multiplizierers m verbunden. Der zu jedem Umschalter gehörende erste Umschalteingang ist mit der entsprechenden Stelle des Ausgangssignals des Chrominanzfilters cf gespeist, so daß in der ersten Umschaltstellung das Chrominanzsignal c direkt vom Chrominanzfilter cf zum Multiplizierer m durchgeschaltet ist. Die zweiten Umschalteingänge sind bezogen auf den entsprechenden ersten Umschalteingang jeweils mit der nächstniederen Stelle des Ausgangssignals des Chrominanzfilters cf gespeist, so daß in der zweiten Umschaltstellung das Chrominanzsignal c um eine Stelle in der Wertigkeit nach oben versetzt, also mit dem Faktor 2 multipliziert, als das vorverstärkte Chrominanzsignal vc in den Multiplizierer m gelangt. Selbstverständlich ist eine sinngemäße Erweiterung des elektronischen Vielfachumschalters um weitere Umschaltstellungen möglich, bei der dann das Chrominanzsignal c um die entsprechenden weiteren Stellen nach oben versetzt in den Multiplizierer m gelangt. Dabei entspricht in jeder Umschaltstellung der Betrag der Verstärkung einer einzelnen Zweierpotenz. Die Steuerung der Umschaltstellung und damit die Festlegung des Verstärkungsfaktors erfolgt durch das erste Steuersignal st1 aus dem Codewandler cw.

0193634

L.C. Freyberger et al 16 - 11

Fl 1238 EP
Sa/Be
5. 3.1985

## Patentansprüche

1. Integrierte digitale Verstärkungsregelungs-Schaltung für das digitale Chrominanzsignal (c) von digitalen Farbfernsehempfängern, die ein Chrominanzfilter (cf) und einen Multiplizierer (m) sowie folgende an dessen Ausgang signalflußmäßig in dieser Reihenfolge angeschlossenen Stufen enthält:
   - eine Burstamplituden-Meßstufe (bm),
   - einen Subtrahierer (sb), dessen Minuend-Eingang ein Referenzsignal (rs) zugeführt ist, und
   - einen Akkumulator (ak), dessen Ausgangssignal als Stellsignal (st) der Verstärkungsregelung dient,
   gekennzeichnet durch folgende Merkmale:
   - ein Codewandler (cw), der mit dem Stellsignal (st) gespeist ist, gibt ein erstes Steuersignal (st1) und ein zweites Steuersignal (st2) ab, das dem Multiplizierer (m) zugeführt ist, und
   - einem Vormultiplizierer (vm), der entweder ein Teil des Chrominanzfilters (cf) oder zwischen diesem und dem Multiplizierer (m) eingefügt ist, ist das erste Steuersignal (st1) zugeführt.

2. Integrierte digitale Verstärkungsregelungs-Schaltung nach Anspruch 1, dadurch gekennzeichnet, daß der jeweils vom ersten Steuersignal (st1) eingestellte Multiplikationsfaktor eine einzelne Zweierpotenz ist.

3. Integrierte digitale Verstärkungsregelungs-Schaltung nach Anspruch 1 oder 2, dadurch gekennzeichnet, daß der Multiplizierer (m) nach dem Pipeline-Prinzip aufgebaut ist, wobei von der geringstwertigen Stelle ausgehend jede jeweils nächsthöherwertige Stelle um einen Takt verzögert verarbeitet ist.

L.C. Freyberger et al 16 - 11

F1 1238 EP

4. Integrierte digitiale Verstärkungsregelungs-Schaltung nach einem der Ansprüche 1 bis 3, dadurch gekennzeichnet, daß als Vormultiplizierer (vm) ein elektronischer Vielfachumschalter in den parallelen Datenleitungen des Chrominanzfilters (cf) dient.

0193634

FI 1238
L. C. Freyberger et al 16·

Europäisches
Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 074 682 (N.V. PHILIPS' GLOEILAMPENFABRIEKEN) * Seite 15, Zeile 15 - Seite 16, Zeile 10; Abbildung 1 * ----- | 1,2 | H 04 N 9/68 |

| RECHERCHIERTE SACHGEBIETE (Int. Cl.4) |
|---|
| H 04 N 9/68 |
| H 04 N 9/64 |
| H 04 N 9/71 |

Der vorliegende Recherchenbericht wurde für alle Patentansprüche erstellt.

| Recherchenort DEN HAAG | Abschlußdatum der Recherche 18-11-1985 | Prüfer CRECHET P.G.M. |
|---|---|---|